# EUROPÄISCHE PATENTSCHRIFT

(11) **EP 2 078 702 B1**
(45) Veröffentlichungstag und Bekanntmachung des Hinweises auf die Patenterteilung: **20.06.2012**
(21) Anmeldenummer: 08172564.0
(22) Anmeldetag: 22.12.2008
(51) Int. Cl.: C02F 3/00, C02F 3/12

(54) **Vorrichtung sowie diskontinuierliches Verfahren zur Abwasserreinigung**
Apparatus and discontinuous method for cleaning waste water
Appareil et procédé discontinu de nettoyage des eaux usées

(30) Priorität: 20.12.2007 AT 20812007
(43) Veröffentlichungstag der Anmeldung: 15.07.2009
(73) Patentinhaber: Gassner, Kurt, 2011 Sierndorf (AT)
(72) Erfinder: Gassner, Kurt, 2011 Sierndorf (AT)
(74) Vertreter: Babeluk, Michael

(56) Entgegenhaltungen:
- EP-A1- 0 019 055
- WO-A1-00/43322
- AT-A4- 503 287
- DE-B- 1 079 554
- DE-B- 1 160 407
- GB-A- 1 239 614
- US-A- 4 719 359
- US-B1- 6 672 156

## Beschreibung

Die Erfindung betrifft ein diskontinuierliches Verfahren zur Abwasserreinigung mit den Schritten
■ Zufuhr von Abwasser in einen Reaktor
■ Belüften des Reaktorinhalts
■ Beenden der Belüftung und Absinken von Schlamm
■ Abzug von Klarwasser und von zumindest einem Teil des abgesetzten Schlamms,
wobei zumindest während des Absinkvorgangs des Schlamms und/oder Abzug des Klarwassers Trübemessungen des Reaktorinhalts innerhalb des Reaktors vorgenommen werden, und bei Erreichen eines vorgegebenen Schwellwertes zumindest eine Ablasseinrichtung für den Abzug von Klarwasser aktiviert wird, sowie eine Vorrichtung zur Durchführung des Reinigungsverfahrens.

Ein Verfahren der eingangs erwähnten Art ist aus der AT 503 287 bekannt geworden. Darin wird ein für den Betrieb einer biologischen Kläranlage geeignetes, als SBR (Sequencing Batch Reactor) Verfahren bezeichnetes Reinigungsverfahren für Abwässer beschrieben, bei welchem in einen Reaktor eine vorbestimmte Abwassermenge eingepumpt und in den oben beschriebenen Schritten behandelt wird. Während der Absetzphase werden Proben des Abwassers entnommen und einer Messeinrichtung für die Trübemessung des Abwassers zugeführt. Sobald die Abwesenheit von Schlamm in der Probe festgestellt wird, erfolgt der Abzug des Klarwassers.

Nachteilig an diesem Verfahren ist, dass eine derartige Messung mit einigem Geräteaufwand verbunden ist, sowie keine Messungen innerhalb des Reaktors, insbesondere keine Online-Messungen, während der Absetz- und Abzugsphase stattfinden.

Es wurden daher Systeme entwickelt, die in der Lage sind, innerhalb des Reaktors Messungen, insbesondere Trübemessungen durchzuführen. So wird beispielsweise in der GB 2 034 296 A eine Vorrichtung beschrieben, die über eine oder mehrere Auslässe verfügt, die an der Seitenwand des Reaktors angeordnet sind, wobei in der Nähe des Auslasses eine Einrichtung zur Trübemessung vorgesehen ist, deren Messwerte mithilfe einer Steuerung die Öffnung oder Schließung des außerhalb des Reaktors befindlichen Auslassventils veranlassen.

In der US 5,421,995 ist eine schwimmende Abzugseinrichtung offenbart, wobei die Eintrittsöffnung für das Klarwasser mithilfe eines Schwimmkörpers stets auf das gleiche Niveau unterhalb des Abwasserspiegels gehalten wird, und eine an einem Kabel befestigte Trübemesseinrichtung unterhalb der Eintrittsöffnung angeordnet ist. Die Eintrittsöffnung ist an einem beweglichen Arm angeordnet und vollführt beim Absinken des Wasserspiegels innerhalb des Reaktors eine radiale Bewegung. Eine weitere Trübemesseinrichtung ist außerhalb des Reaktors in der Ablasseinrichtung vorgesehen, die bei Vorhandensein von Schlamm das außerhalb des Reaktors befindliche Ablassventil schließt. Zu diesem Zeitpunkt befindet sich jedoch bereits Schlamm in der Ablassleitung, ein Umstand, den es zu verhindern gilt.

Die US 4,719,359 A beschreibt eine Sensoreinrichtung für die Erfassung des Schlammniveaus in einem Absetztank, Absetzbecken und dergleichen, wobei zwischen einem definierten Spalt mittels Lichtsensoren die Trübung des im Spalt befindlichen Abwassers bestimmt wird. Weitere für die Trübemessung geeignete Sensoren können der GB 1 239 614 A sowie der US 6,672,156 B1 entnommen werden.

Um zu vermeiden, dass in die Vorrichtungen nach dem Stand der Technik zumindest eine geringe Menge an Belebtschlamm eindringt, insbesondere sobald das Klarwasser zur Gänze abgezogen ist, wird üblicherweise eine Restmenge an Klarwasser in dem Reaktor belassen, wodurch jedoch der Durchsatz dieser Anlagen reduziert wird.

Es ist daher Aufgabe der Erfindung die oben genannten Nachteile des Stands der Technik zu beseitigen und ein Verfahren zur Abwasserreinigung zu liefern, das weitgehendst automatisch abläuft, sowie eine Vorrichtung für deren Durchführung zu liefern, bei welcher während des Abzugs an Klarwasser kein Belebtschlamm eindringen kann.

Diese Aufgabe wird erfindungsgemäß dadurch gelöst, dass aus den bei der Trübemessung erhaltenen Messwerten die aktuelle Absetzgeschwindigkeit des Schlamms bestimmt wird, wobei zusätzlich während des Absetz- und Abzugsprozesses eine Überwachung des Füllstandes innerhalb des Reaktors erfolgt. Anhand der erhaltenen Messwerte wird eine Optimierung der Verfahrensführung in Hinblick auf die pro Reinigungszyklus eingesetzte Abwassermenge und des vorgegebenen Schwellenwertes für die Trübung ermöglicht.

Unter "Reaktor" werden im Rahmen dieser Offenbarung jegliche Behältnisse, die zur Reinigung von Abwässern geeignet sind, gleichgültig ob in offener oder geschlossener Form, verstanden.

Im Gegensatz zu dem bekannten Stand der Technik erfolgt die Trübemessung des Reaktorinhaltes, insbesondere des Abwassers, in situ, das heißt innerhalb des Reaktors. Bei dem bekannten Verfahren gemäß der AT 503 287 A4 wird eine Probe aus dem Reaktor entnommen und über eine Zuleitung in eine Messeinrichtung verbracht. Bei ungünstigen Verhältnissen kann es zu einer Verfälschung der Messergebnisse kommen, weil sich beispielsweise ein Teil des sich im Abwasser befindlichen Schlamms bereits in der Zuleitung abgesetzt hat und für die eigentliche Messung nicht mehr zur Verfügung steht. Durch die innerhalb des Reaktors ablaufende Messung können derartige Probleme vermieden werden. Des Weiteren läuft die Überwachung des Verfahrens vollautomatisch ab und erfolgt über den kompletten Absetz- und Abzugszyklus und nicht nur punktuell wie bei den bekannten Verfahren.

Neben der Trübemessung erfolgt zusätzlich eine kontinuierliche Überwachung des Füllstandes innerhalb des Reaktors insbesondere während der Absetz- und Abzugsphase. Damit lässt sich die aktuelle Absetzgeschwindigkeit des Schlamms noch genauer ermitteln. Des Weiteren wird während der Absetzphase eine Aussage über die Dichtigkeit des Reaktors bzw. seiner Komponenten erhalten und während der Befüllung des Reaktors mit Abwasser eine unkontrollierte Überfüllung desselben vermieden.

Vorteilhafterweise erfolgt die Überwachung des Füllstandes im Reaktor mittels Signalgebung zur Niveauerfassung, beispielsweise auf optischem oder akustischem Weg und hierbei besonders bevorzugt innerhalb des Reaktors. Ebenso sind auch andere Messmethoden für die Überwachung des Füllstandes, insbesondere außerhalb des Reaktors einsetzbar; allerdings sollten die Messwerte für eine Steuerung auslesbar und verarbeitbar sein.

In einer bevorzugten Ausführung der Erfindung erfolgt zumindest eine weitere Trübemessung während der Abzugsphase, um den Abzug des Klarwassers zu überwachen und ein unbeabsichtigtes Abziehen von Schlamm zu verhindern. Bei Überschreiten eines vorgegebenen Schwellwertes wird ein Abzugsventil für den Abzug von Klarwasser geschlossen.

Während der Absetzphase können diese Trübemessungen in periodischen Zeitabständen oder alternativ dazu kontinuierlich erfolgen. Besonders bevorzugt erfolgt eine permanente Trübemessung von Beginn bis Ende der gesamten Abzugsphase.

Die Trübemessung erfolgt auf an sich bekannter Weise entweder auf optischem Weg, insbesondere mittels Streulichtverfahren oder akustischem Weg, beispielsweise mittels Ultraschallverfahren. Ebenso kann eine Kombination dieser Messprinzipien eingesetzt werden.

In einer bevorzugten Ausführung der Erfindung wird nach Abzug des Klarwassers die Schlammhöhe in dem Reaktor bestimmt und bei Erreichen eines vorgegebe nen Schwellwertes eine Ablasseinrichtung für den Abzug von Schlamm aktiviert. Durch die Überwachung des Füllstandes im Reaktor wird stets ein optimales Verhältnis zwischen Belebtschlamm und zu reinigendem Abwasser während des Reinigungsvorgangs erzielt.

In einer Variante der Erfindung erfolgt eine Messung der Höhe des abgesetzten Schlamms über je eine Dichtemessung von Klarwasser und Schlamm. Durch Vergleich der erhaltenen Dichtewerte in unterschiedlichen Reaktorhöhen kann der Schlammpegel bestimmt werden.

Die Aufgabe wird des Weiteren durch eine Vorrichtung gelöst, die über einen Reaktor, zumindest einer Abzugseinrichtung für Klarwasser und zumindest einer weiteren Abzugseinrichtung für den Schlamm verfügt, wobei die Abzugseinrichtung für das Klarwasser als zumindest ein in dem Reaktor schwimmendes Abzugsventil ausgebildet ist und des Weiteren die zumindest eine im Reaktor angeordnete Vorrichtung zur Trübemessung vorgesehen ist. Diese Vorrichtung erlaubt eine in situ Überwachung des Reinigungsverfahrens, wobei die von der Vorrichtung zur Trübemessung gelieferten Messwerte eine Ansteuerung des Abzugsventils erlauben.

Hierbei verfügt die Vorrichtung zur Trübemessung über zumindest zwei voneinander unabhängige Messstellen. Die Messstellen sind hierzu in unterschiedlichen Höhen unterhalb des Abzugsventils angebracht; hierbei werden keine Mittelwerte für einen bestimmten Bereich innerhalb des Reaktors gebildet, sondern eine genauere Bestimmung des Absinkverhaltens des Schlamms, insbesondere dessen Absetzgeschwindigkeit durchgeführt.

Um einen einfachen Ausbau der erfindungsgemäßen Vorrichtung für Reinigungs- und Wartungsarbeiten zu erzielen, ist das schwimmende Abzugsventil und die Vorrichtung zur Trübemessung als bauliche Einheit ausgebildet. Somit kann die Einheit einfach aus dem Reaktor entnommen und gereinigt oder ausgetauscht werden.

Dies wird zusätzlich dadurch erleichtert, wenn in einer weiteren Variante der Erfindung die aus Abzugseinrichtung und der Vorrichtung zur Trübemessung bestehende bauliche Einheit entlang von vertikalen Führungen geführt ist. Unter vertikalen Führungen sind insbesondere Führungsrohre oder -gestänge zu verstehen, die parallel zu der senkrecht zur Stellfläche verlaufenden Achse des Reaktors angeordnet sind.

Besonders bevorzugt ist neben der Trübemesseinrichtung eine Einrichtung zur Überwachung des Reaktorfüllstandes, ein sogenanntes Niveauerkennungssystem vorgesehen. Diese Einrichtung verhindert, wie bereits erwähnt, einerseits eine unkontrollierte Überfüllung des Reaktors, andererseits gibt sie nach dem Abzug des Klarwassers Auskunft über den im Reaktor verbleibenden Wasser- und Schlammpegel.

Um einen Nasskontakt des Niveauerkennungssystems zum Abwasser und/oder Belebtschlamm und eine mögliche Verblockung (Behinderung) oder Verschmutzung zu vermeiden, wurde in einer weiteren bevorzugten Ausführung der erfindungsgemäßen Vorrichtung die Einrichtung zur Überwachung des Niveaus konstruktiv so gelöst, dass die prozessnotwendigen Pegelstände durch die Installierung des Niveauerkennungssystems in die vorhandene Abzugs- und Führungsvorrichtung so integriert wurden, dass dieses keinen direkten Wasser/Schlammkontakt hat.

Da sowohl die Abzugseinrichtung selbst zum Öffnen des Ventils als auch die einzelnen Messeinrichtung vor allem mit Energie versorgt werden müssen, sind Versorgungsleitungen vorgesehen, welche so angeordnet sind, dass keine Reduzierung der Ablaufquerschnitte betreffend Ablaufventil und Ablaufleitung gegeben ist.

Im Folgenden wird anhand eines nicht-einschränkenden Ausführungsbeispiels mit zugehörigen Figuren die Erfindung näher erläutert. Darin zeigen:
- Fig. 1: eine Vorrichtung zur Überwachung des erfindungsgemäßen diskon- tinuierlichen Verfahrens zur Abwasserreinigung; und
- Fig. 2: eine Prinzipskizze über den Ablauf des erfindungsgemäßen Verfah- rens.

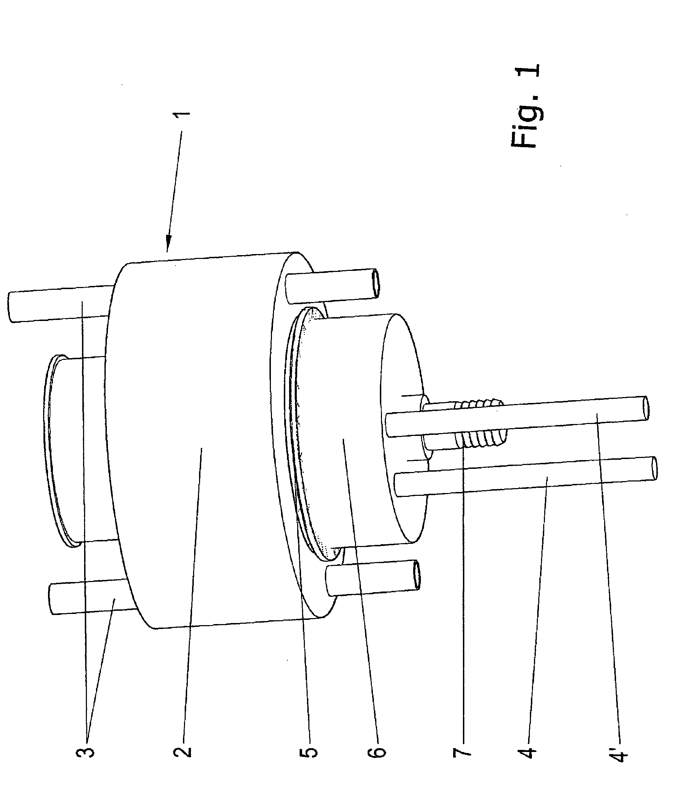

In der Fig. 1 ist ein Abzugsventil 1 mit integrierter Trübemesseinrichtung dargestellt. Das Abzugsventil 1 verfügt über einen Auftriebskörper 2, der ein Schwimmen des Abzugsventils 1 auf der Oberfläche des Reaktorinhaltes erlaubt, wobei die Eintauchtiefe verstellbar sein kann. Um ein unkontrolliertes Schwanken des Abzugsventils 1 beim Befüllen oder Entleeren des Reaktors und damit eine mögliche Störung der Trübemessungen zu vermeiden, sind zwei Führungsrohre 3 vorgesehen, entlang derer sich der Auftriebskörper 2 je nach Füllstand im Reaktor auf und ab bewegt. Diese Auf- und Abbewegung kommt allein durch den Füllstand im Reaktor und dem Auftrieb des Abzugsventils 1 zustande.

In einer anderen Ausführung der Erfindung kann das Abzugsventil 1 entlang der Führungsrohre 3 über einen außerhalb des Reaktors befindlichen Antrieb zwangsgeführt werden.

Unterhalb des in dieser Variante zylindrisch ausgeführten Auftriebskörpers 2 mit integriertem Abzugsventil befindet sich eine Trübemesseinrichtung mit zwei von einander unabhängigen, in unterschiedlichem Abstand von dem Auftriebskörpers 2 und in einem Abstand zueinander angeordnete Messeinrichtungen 4, 4', die in das im Reaktor befindliche Abwasser eintauchen und kontinuierliche Messungen der Wassertrübe vornehmen. Selbstverständlich kann alternativ auch nur eine oder aber mehrere Messstellen vorgesehen sein.

Zwischen Auftriebskörper 2 und der Trübemesseinrichtung 4, 4' ist eine Ventilplatte 5 angeordnet, die über eine Steuerung in Abhängigkeit von den ermittelten Messwerten der Trübemessung geöffnet oder geschlossen wird. Unterhalb der Ventilplatte 5 befindet sich an einer unteren Abdeckung 6, durch die auch die Messeinrichtungen 4, 4' hindurchgeführt sind, ein Schlauchanschluss 7, über den das Klarwasser aus dem Reaktor beispielsweise mittels einer Pumpe abgezogen oder im einfachsten Fall aus dem Reaktor abgelassen wird, wenn das Gefälle zum Auffangbehälter für das Klarwasser, dem sogenannten Vorfluter, ausreichend ist.

Durch diesen Aufbau des schwimmenden Abzugsventils 1 erfolgt die Trübemessung stets im gleichen Abstand von der von der Ventilplatte 5 verschließbaren Ventilöffnung, wodurch ein Unterschreiten des Mindestabstandes vom Belebtschlamm und damit ein unbeabsichtigtes Abpumpen des Schlamms über das Abzugsventils 1, das lediglich für den Abzug des Klarwassers vorgesehen ist, vermieden wird.

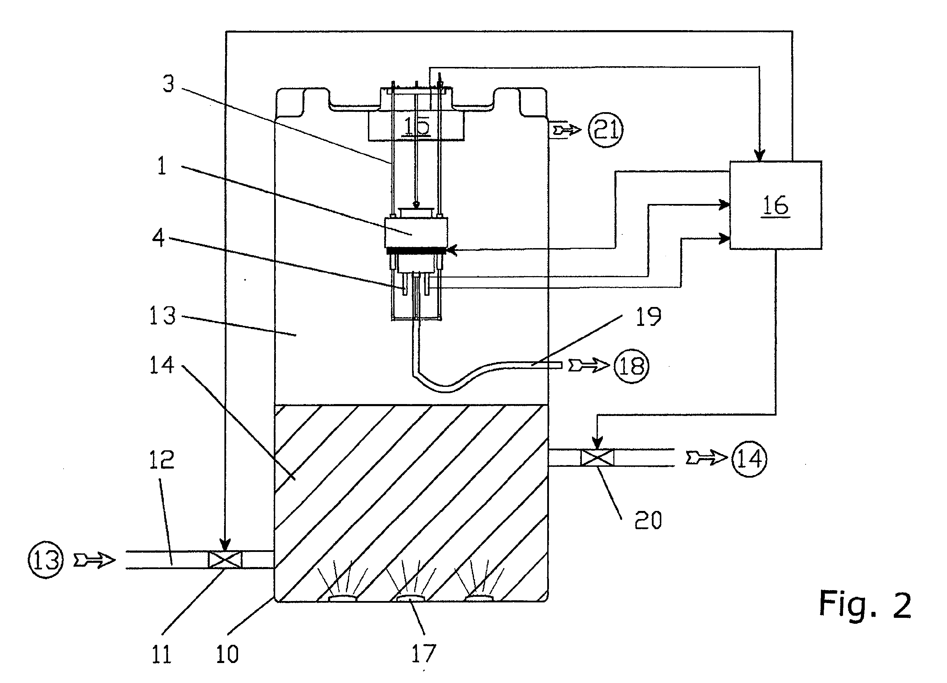

Dieses Abzugsventil 1 ist in einem Reaktor 10 angeordnet, in dem das nachstehend beschriebene, diskontinuierliche Verfahren zur Abwasserreinigung gemäß der Fig. 2 durchgeführt wird.

Zunächst wird über eine mit einem Einlassventil 11 versehene Zulaufleitung 12 das zu reinigende Abwasser 13 in den Reaktor 10, in dem sich bereits eine definierte Menge an Belebtschlamm 14 befindet, gefüllt. Hierbei überwacht eine beispielsweise in dem Reaktordeckel und/oder im Bereich des Abzugsventils 1 angeordnete Einrichtung 15 zur Überwachung des Reaktorfüllstandes den Pegelstand und veranlasst über eine Steuerung 16 die Schließung des Einlassventils 11, sobald ein vorgegebener Pegelstandswert erreicht ist. Während des Befüllvorganges bewegt sich das in der Fig. 1 dargestellte Abzugsventil 1 aufgrund seines Auftriebkörpers 2 mit steigendem Füllstand in Richtung Reaktordeckel. Ein im Bereich des Reaktordeckels angeordneter Überlauf 21 verhindert eine Überfüllung des Reaktors 10.

Nach dem Befüllen des Reaktors 10 mit Abwasser folgt zunächst die Belüftungsphase und danach eine Beruhigungsphase, die sogenannten Vorabsetzphase, bei der erfindungsgemäß die maximale Absetzgeschwindigkeit des Schlamms bestimmt wird. Während dieser Phase wird ebenfalls der Pegelstand innerhalb des Reaktors 10 überwacht. Da zu diesem Zeitpunkt kein Klarwasser abgezogen wird, ist eine Verringerung des Pegelstandes ein Zeichen für die fehlende Dichtheit des Reaktors 10 und/oder seiner Zu- bzw. Ableitungen, so dass eine entsprechende Warnung über die Steuerung 16 ausgegeben wird.

Die Belüftung des Abwassers erfolgt beispielsweise mittels einer am Boden des Reaktors 10 befindlichen Belüftungseinrichtung 17. Im Zuge dieses Belüftungsprozesses wird eine Reinigung des Abwassers auf aerobem Weg durchgeführt.

Nach Abschluss des Belüftungsvorgangs folgt, wie bereits erwähnt, eine Vorabsetzphase, während gleichzeitig eine anaerobe Reinigung des Abwassers erfolgt, wobei die im Abwasser 13 befindlichen Schwebstoffe sich aufgrund fehlender Strömung und der Schwerkraft am Reaktorboden als Schlamm 14 absetzen. In den behördlichen Vorschriften ist für die Reinigung von Abwässern für gewöhnlich eine sehr lange Vorabsetzphase vorgeschrieben, weil diese Vorschriften üblicherweise für sehr große Becken gelten. Durch den Einsatz der erfindungsgemäßen Abzugseinrichtung 20 mit gleichbleibendem Abstand zwischen Messeinrichtung 4, 4' und Ventilplatte 5, über die das Klarwasser abgezogen wird, wird auch während der Vorabsetzphase eine genaue Bestimmung der (maximalen) Absetzgeschwindigkeit des Schlamms ermöglicht. Aufgrund dieser Bestimmung der Schlammabsetzgeschwindigkeit kann wiederum der Zeitpunkt für den Start der nachfolgenden Abzugsphase genau festgelegt werden, wodurch sich die Vorabsetzphase signifikant verkürzen und damit der Durchsatz der Anlage weiter steigern lässt.

Während der Absetz- und Abzugsphase werden von den in dem Abzugsventil angeordneten Messstellen 4, 4' für die Trübemessung laufend Messwerte über die Trübheit des Abwassers 13 ermittelt und in einer in der Steuerung 16 befindlichen Auswerteeinrichtung ausgewertet. Anhand des sich reduzierenden Gehalts an Schwebstoffen kann gleichzeitig auch die minimale Absetzgeschwindigkeit des Schlamms bestimmt werden. Sobald ein Schwellwert für die Konzentration der im Klarwasser 13 - das sich oberhalb des abgesetzten Schlamms befindet - vorhandenen Schwebstoffe unterschritten wird, wird über die Steuerung 16 das Abzugsventil 1 geöffnet und das Klarwasser 18 über eine am Abzugsventil 1 befestigte Ableitung 19 abgezogen. Dieses Steuerungs- und Messverfahren garantiert, dass der Klarwasserabzug automatisch der geringsten Absetzgeschwindigkeit des Schlamms während der Absetz- und Abzugsphase folgt.

Während des Abzugs des Klarwassers 18 wird weiterhin die Trübemessung fortgesetzt, sodass ein Schließen des Abzugsventils 1 ausgelöst wird, sobald die in Absetzung befindliche Schlammfraktion 14 erreicht wird. In der Praxis erfolgt der Abzug des Klarwassers 18, sobald der Schlammpegel 14 unterhalb der tiefer liegenden Messstelle 4 abgesunken ist. Liefert diese Messstelle 4 wiederum Messwerte, die ein Vorliegen von Schlamm 14 anzeigen, ist also die Messstelle 4 wieder in Schlamm 14 eingetaucht, wird das Abzugsventil 1 wieder geschlossen.

Gleichzeitig erfolgt während der Abzugsphase auch eine Zeitüberwachung. Wird ein vorgegebenes Zeitfenster für das Offenhalten des Abzugsventils 1 überschritten, löst die Steuerung 16 ebenfalls ein Schließen des Abzugsventils 1 aus.

Ebenso wird der Füllstand in dem Reaktor 10 neben der Zeitüberwachung auch mithilfe der mithilfe des Niveauerkennungssystems 15 überwacht. Ist der gemessene Füllstand in dem Reaktor 10 nach dem Abzug der Klarwasserfraktion 18 höher oder niedriger als vorgegeben, so wird dies über die Steuerung 16 registriert und ausgewertet. Wiederholt sich dies mehrmals, wobei die Anzahl der Wiederholungen einstellbar ist, wird der Reaktor 10 nicht mehr mit zu reinigendem Abwasser 13 beschickt, und die Steuerung 16 erstellt eine Nachricht, wonach der Reaktor 10 gewartet werden muss.

Eine Zeitüberwachung ist ebenfalls für den Abzug von Schlamm 14 vorgesehen, um bei Ausfall der Messstellen 4, 4' ein übermäßiges Entfernen von Belebtschlamm 14 aus dem Reaktor 10 zu verhindern. Tritt der Fall auf, dass die untere Messstelle 4 einen unteren festgelegten Pegel in vorgegebener Zeit nicht erreicht, so wird kein Überschussschlamm abgezogen. Dadurch ist gewährleistet, dass immer an derselben Stelle und auf gleichem Niveau die Trübemessung zur Schlammpegelbestimmung erfolgt. Wiederholt sich dies mehrmals, wobei die Anzahl der Wiederholungen einstellbar ist, wird der Reaktor 10 nicht mehr mit zu reinigendem Abwasser 13 beschickt, und die Steuerung 16 erstellt eine Nachricht, wonach der Reaktor 10 gewartet werden muss.

Nach Abzug des Klarwassers 18 sowie gegebenenfalls von Überschussschlamm 14 erfolgt ein neuerliches Befüllen des Reaktors 10 und der oben beschriebene Reinigungszyklus beginnt von neuem.

Die abgezogene Klarwassermenge pro Zyklus entspricht der hydraulischen Durchsatzleistung des Reaktors 10 und wird als hydraulisches Nutzvolumen des Reaktors 10 bezeichnet. Das maximale Nutzvolumen ist von der Absetzgeschwindigkeit des Schlamms 14 abhängig und kann sich von einem Zyklus zum nächsten schnell ändern. Bei den konventionellen Methoden wird mit sehr geringen Schlammabsetzgeschwindigkeiten gerechnet, um mit hoher Sicherheit eine ausreichende Trennung von Schlamm und Klarwasser zu erhalten. Dadurch verlängern sich jedoch die Zykluszeiten signifikant und die Reaktordurchsätze werden stark reduziert. Das erfindungsgemäße Verfahren hingegen bestimmt periodisch oder kontinuierlich die tatsächliche Absetzgeschwindigkeit des Schlamms und überwacht gleichzeitig permanent den Abzugsvorgang, sodass eine Optimierung des Reaktordurchsatzes möglich ist.

Das erfindungsgemäße Verfahren läuft vollautomatisch ab. Die Steuerung regelt den Zulauf an zu reinigendem Abwasser mithilfe der von der Einrichtung zur Bestimmung des Füllstandes; sie setzt die Belüftungsphase in Gang und überwacht deren Ablauf; während der Absetzphase werden die von der Trübemesseinrichtung übermittelten Messwerte ausgewertet und bei Unterschreiten eines Sollwertes wird der Abzug des Klarwassers ausgelöst und überwacht. Ebenso wird von der Steuerung aufgrund der von der Einrichtung zur Bestimmung des Füllstandes übermittelten Pegelstände gegebenenfalls ein Abzug an überschüssigem Schlamm veranlasst.

Gleichzeitig wird bevorzugterweise nicht ein einzelner Reaktor, sondern werden eine Vielzahl von Reaktoren, die beispielsweise in Form einer komplexen Anlage für die Klärung kommunaler Abwässer vorgesehen sind, mithilfe der Steuerung überwacht. Der Vorteil einer Vielzahl kleinerer Reaktoren im Vergleich zu einzelnen großen liegt insbesondere darin, dass bei Auftreten von Problemen bei einem einzelnen Reaktor die Gesamtkapazität des Systems nicht signifikant reduziert wird. Mithilfe der erfindungsgemäßen in situ Bestimmung der Absetzgeschwindigkeit des Schlamms durch Bestimmung der Trübung, insbesondere auch in Kombination mit der Niveauerkennung, innerhalb jedes einzelnen Reaktors wird dessen Durchsatz optimiert, was wiederum zu einem verbesserten Wirkungsgrad der gesamten Anlage führt.

Es versteht sich, dass das beschriebene Ausführungsbeispiel in nicht einschränkender Weise zu betrachten ist. Insbesondere können auch andere Verfahrensabläufe mit zugehörigen Vorrichtungen vorgesehen sein, bei welchen beispielsweise sowohl über ein einzelnes Abzugsventil sowohl Klarwasser als auch gegebenenfalls Schlamm abgezogen werden, wobei aufgrund der ermittelten Trübemesswerte unterschiedliche Ventile angesteuert werden, die eine Weiterleitung des Klarwassers bzw. des Schlamms in unterschiedliche Auffangbehälter für das Klarwasser bzw. für den Schlamm bewirken.

Des Weiteren kann die Niveaubestimmung nicht nur im Deckel des Reaktors, sondern an jeder geeigneten Stelle innerhalb des Reaktors untergebracht sein, insbesondere auch in der Führungsvorrichtung der Abzugseinrichtung, wobei hierbei das Niveauerkennungssystem bevorzugt oberhalb des Auftriebkörpers der Abzugseinrichtung angeordnet ist, sodass sich das Niveauerkennungssystem außerhalb des Abwassers befindet, um eine Verunreinigung derselben zu vermeiden. Damit wird eine schwimmende, kompakte Abzugseinrichtung mit integriertem Niveauerkennungssystem sowie mit Messeinrichtungen für die Trübemessung erhalten, wobei vor und während des Klarwasserabzugs der Pegelstand und die Trübung in situ gemessen werden, wodurch die Bestimmung der minimalen und der maximalen Absetzgeschwindigkeit des Schlamms ermöglicht wird. Durch die kompakte Bauweise und die senkrechte Bewegung der Abzugseinrichtung entlang der vertikalen Führung ist es zudem möglich, die erfindungsgemäße Abzugseinrichtung insbesondere in Reaktoren mit geringem Durchmesser einzusetzen. Bevorzugterweise wird dabei die Abzugseinrichtung in Montageöffnungen mit einem Durchmesser von 500 mm im Deckel des Reaktors eingesetzt, wobei das Einsetzen bzw. das Herausführen der Abzugseinrichtung mit wenigen Handgriffen bewerkstelligt werden kann.

Gleichzeitig ermöglicht die erfindungsgemäße Abzugseinrichtung bzw. das erfindungsgemäße Verfahren nicht nur einen vollautomatischen, schnellstmöglichen Abzug des Klarwassers, sondern es werden auch automatisch Ablassvolumen sowie Absetzgeschwindigkeit bei gleichzeitiger Feststellung der jeweiligen Position der Abzugseinrichtung ermittelt und die erforderliche Anpassung des Pegels des Belebtschlamms vorgenommen, wobei die von Zyklus zu Zyklus unterschiedlichen Abwasserbelastungen berücksichtigt werden.

## Patentansprüche

1. Diskontinuierliches Verfahren zur Abwasserreinigung mit den Schritten
- Zufuhr von Abwasser (13) in einen Reaktor (10)
- Belüften des Reaktorinhalts
- Beenden der Belüftung und Absinken von Schlamm (14)
- Abzug von Klarwasser (18) und von zumindest einem Teil des abgesetzten Schlamms (14),
wobei zumindest während des Absinkvorgangs des Schlamms (14) und/ oder Abzug des Klarwassers (18) Trübemessungen des Reaktorinhalts innerhalb des Reaktors (10) vorgenommen wird, und bei Erreichen eines vorgegebenen Schwellwertes zumindest eine Ablasseinrichtung (1, 19) für den Abzug von Klarwasser (18) aktiviert wird, **dadurch gekennzeichnet, dass** aus den bei der Trübemessung erhaltenen Messwerten die aktuelle Absetzgeschwindigkeit des Schlamms (14) bestimmt wird, wobei zusätzlich während des Absetz- und Abzugsprozesses eine Überwachung des Füllstandes innerhalb des Reaktors (10) erfolgt.

2. Verfahren nach Anspruch 1, **dadurch gekennzeichnet, dass** die Überwachung des Füllstandes im Reaktor (10) auf optischem oder akustischem Weg oder mittels anderen verstopfungsfreien Niveauerkennungssystemen erfolgt.

3. Verfahren nach Anspruch 1 oder 2, **dadurch gekennzeichnet, dass** zumindest eine weitere Trübemessung in der Abzugsphase erfolgt.

4. Verfahren nach einem der Ansprüche 1 bis 3, **dadurch gekennzeichnet, dass** die Trübemessung in periodischen Zeitabständen erfolgt.

5. Verfahren nach einem der Ansprüche 1 bis 3, **dadurch gekennzeichnet, dass** die Trübemessung kontinuierlich erfolgt.

6. Verfahren nach einem der Ansprüche 1 bis 5, **dadurch gekennzeichnet, dass** die Trübemessung auf optischem Weg, insbesondere mittels Streulichtverfahren erfolgt.

7. Verfahren nach einem der Ansprüche 1 bis 6, **dadurch gekennzeichnet, dass** bei Überschreiten eines vorgegebenen Schwellwertes ein Abzugsventil (1) für den Abzug von Klarwasser (18) geschlossen wird.

8. Verfahren nach einem der Ansprüche 1 bis 7, **dadurch gekennzeichnet, dass** zusätzlich während des Absetz- oder Abzugsprozesses eine Überwachung des Schlammniveaus innerhalb des Reaktors (10) erfolgt.

9. Verfahren nach Anspruch 8, **dadurch gekennzeichnet, dass** eine Messung der Höhe des abgesetzten Schlamms (14) über je eine Dichtebestimmung von Klarwasser (18) und Schlamm (14) erfolgt.

10. Verfahren nach einem der Ansprüche 1 bis 9, **dadurch gekennzeichnet, dass** nach Abzug des Klarwassers (18) die Höhe des abgesetzten Schlamms (14) in dem Reaktor (10) bestimmt und bei Überschreiten eines vorgegebenen Schwellwertes eine Ablasseinrichtung (20) für den Abzug von Schlamm (14) aktiviert wird.

11. Verfahren nach Anspruch 10, **dadurch gekennzeichnet, dass** eine Messung der Höhe des abgesetzten Schlamms (14) auf akustischem Weg, insbesondere mittels Ultraschallverfahren erfolgt.

12. Vorrichtung (1) zur Durchführung eines Verfahrens nach einem der Ansprüche 1 bis 10, mit einem Reaktor (10), zumindest einer Abzugseinrichtung (1, 19) für Klarwasser (18) und zumindest einer weiteren Abzugseinrichtung (20) für den Schlamm (14), wobei die Abzugseinrichtung (1, 19) für das Klarwasser (18) als zumindest ein in dem Reaktor (10) schwimmendes Abzugsventil (1) ausgebildet ist, und des Weiteren zumindest eine im Reaktor (10) angeordnete Vorrichtung zur Trübemessung vorgesehen ist, **dadurch gekennzeichnet, dass** die Abzugseinrichtung (1) und die Vorrichtung zur Trübemessung als bauliche Einheit ausgebildet sind, wobei die zumindest eine Vorrichtung zur Trübemessung über zumindest zwei voneinander unabhängige Messstellen (4, 4') verfügt, die in unterschiedlicher Höhe unterhalb der Abzugseinrichtung (1) angebracht sind.

13. Vorrichtung nach Anspruch 12, **dadurch gekennzeichnet, dass** die aus Abzugseinrichtung (1) und der Vorrichtung zur Trübemessung bestehende bauliche Einheit entlang von vertikalen Führungen (3) geführt ist.

14. Vorrichtung nach Anspruch 12 oder 13, **dadurch gekennzeichnet, dass** zusätzlich zumindest eine Einrichtung (15) zur Überwachung des Reaktorfüllstandes vorgesehen ist.

15. Vorrichtung nach einem der Ansprüche 12 bis 14, **dadurch gekennzeichnet, dass** die Einrichtung (15) zur Überwachung des Reaktorfüllstandes an dem Abzugsventil (1) und/oder an den Führungen (3) angeordnet ist.

## Claims

1. Discontinuous method for wastewater treatment including the following steps:
- feed of wastewater (13) into a reactor (10)
- aeration of the reactor content
- termination of aeration and settling of sludge (14)
- extraction of clear water (18) and at least part of the sludge (14),
wherein at least during the settling process of the sludge (14) and/or the extraction of the clear water (18) turbidity measurement of the reactor content is conducted inside the reactor (10) and a extraction device (1, 19) for the extraction of clear water (18) is activated when a predetermined threshold value is reached, **characterised in that** the current settling rate of the sludge (14) is determined from the measured turbidity values, and additionally the filling level of the reactor (10) is monitored during the settling and extraction process.

2. Method according to claim 1, **characterised in that** monitoring of the filling level of the reactor (10) is carried out by optical or acoustical means or by other non-clogging level determination systems.

3. Method according to claim 1 or 2, **characterised in that** at least one further turbidity measurement is carried out during the extraction phase.

4. Method according to any of claims 1 to 3, **characterised in that** turbidity measurement is repeated periodically.

5. Method according to any of claims 1 to 3, **characterised in that** turbidity is measured continuously.

6. Method according to any of claims 1 to 5, **characterised in that** turbidity is measured by optical means, in particular by the straylight method.

7. Method according to any of claims 1 to 6, **characterised in that** a extraction valve (1) for the clear water extraction (18) is closed if a predetermined threshold value is exceeded.

8. Method according to any of claims 1 to 7, **characterised in that** additionally during the settling or extraction process the sludge level inside the reactor (10) is monitored.

9. Method according to claim 8, **characterised in that** measuring of the level of settled sludge (14) is carried out via density measurement of the clear water (18) as well as the sludge (14).

10. Method according to any of claims 1 to 9, **characterised in that** after clear water extraction (18) the level of settled sludge (14) in the reactor (10) is determined and a decanter (20) for the sludge (14) is activated if a predetermined threshold value is exceeded.

11. Method according to claim 10, **characterised in that** the level of settled sludge (14) is determined acoustically, in particular by means of an ultrasonic method.

12. Apparatus (1) for conducting the method according to any of claims 1 to 10, comprising a reactor (10), at least one extraction device (1, 19) for clear water (18) and at least one further decanter (20) for sludge (14), the extraction device (1, 19) for clear water (18) being configured as at least one extraction valve (1) floating in the reactor (10), and at least one turbidity measuring device being provided within the reactor (10), **characterised in that** the extraction device (1) and the turbidity measuring device are designed as one unit where the at least one turbidity measuring device is provided with at least two independent measuring sites (4, 4') placed at differing levels below the extraction device (1).

13. Apparatus according to claim 12, **characterised in that** the unit consisting of extraction device (1) and turbidity measuring device is guided by vertical guiding rods (3).

14. Apparatus according to claim 12 or 13, **characterised in that** additionally at least one device (15) is provided for monitoring the filling level of the reactor.

15. Apparatus according to any of claims 12 to 14, **characterised in that** the device (15) for monitoring the reactor filling level is placed at the extraction valve (1) and/or on the guiding rods (3).

## Revendications

1. Procédé discontinu d'épuration d'eaux usées comportant les étapes suivantes :
- transfert d'eaux usées (13) dans un réacteur (10),
- ventilation de la partie interne du réacteur,
- arrêt de la ventilation et sédimentation des boues (14),
- extraction d'eau clarifiée (18) et d'au moins une partie de la boue déposée (14),
au moins pendant la phase de sédimentation des boues (14) et/ou d'extraction de l'eau clarifiée (18), on effectue des mesures de la turbidité du contenu du réacteur dans le réacteur (10), et lorsque l'on a atteint une valeur de seuil prédéfinie, on active au moins un dispositif d'évacuation (1, 19) pour l'extraction de l'eau clarifiée (18),
**caractérisé en ce que**
l'on détermine, à partir des valeurs de mesure obtenues lors de la mesure de la turbidité la vitesse de sédimentation actuelle des boues (14), et en outre, pendant la phase de sédimentation et d'extraction, on effectue une surveillance de l'état de remplissage à la partie interne du réacteur (10).

2. Procédé conforme à la revendication 1,
**caractérisé en ce que**
la surveillance de l'état de remplissage dans le réacteur (10) est effectuée par voie optique ou acoustique ou au moyen d'autres systèmes de reconnaissance de niveau non sensibles à l'encrassement.

3. Procédé conforme à la revendication 1 ou 2,
**caractérisé en ce que**
l'on effectue au moins une autre mesure de la turbidité dans la phase d'extraction.

4. Procédé conforme à l'une des revendications 1 à 3,
**caractérisé en ce que**
la mesure de la turbidité est effectuée à intervalles périodiques.

5. Procédé conforme à l'une des revendications 1 à 3,
**caractérisé en ce que**
la mesure de la turbidité est effectuée en continu.

6. Procédé conforme à l'une des revendications 1 à 5,
**caractérisé en ce que**
la mesure de la turbidité est effectuée par voie optique, en particulier par un procédé de mesure de la lumière diffusée.

7. Procédé conforme à l'une des revendications 1 à 6,
**caractérisé en ce qu'**
en cas de dépassement d'une valeur de seuil prédéfinie on ferme une soupape d'extraction (1) pour l'extraction de l'eau clarifiée (18).

8. Procédé conforme à l'une des revendications 1 à 7,
**caractérisé en ce qu'**
en outre, pendant la phase de sédimentation ou d'extraction on surveille le niveau de boues à la partie interne du réacteur (10).

9. Procédé conforme à la revendication 8,
**caractérisé en ce que**
l'on effectue une mesure de la hauteur de la boue sédimentée (14) en déterminant la densité de l'eau clarifiée (18) et des boues (14).

10. Procédé conforme à l'une des revendications 1 à 9,
**caractérisé en ce qu'**
après extraction de l'eau clarifiée (18) on détermine la hauteur des boues (14) déposées dans le réacteur (10) et en cas de dépassement d'une valeur de seuil prédéfinie on active un dispositif d'extraction (20) pour les boues (14).

11. Procédé conforme à la revendication 10,
**caractérisé en ce que**
l'on effectue une mesure de la hauteur des boues déposées (14) par voie acoustique, en particulier par un procédé par ultrasons.

12. Dispositif (1) permettant la mise en oeuvre du procédé conforme à l'une des revendications 1 à 10, comportant un réacteur (10), au moins un dispositif d'extraction (1,19) de l'eau clarifiée (18) et au moins un autre dispositif d'extraction (20) pour les boues (14), le dispositif d'extraction (1, 19) de l'eau clarifiée (18) étant réalisé sous la forme d'au moins une soupape d'extraction (1) flottant dans le réacteur (10), et en outre, au moins un dispositif de mesure de la turbidité étant monté dans le réacteur (10),
**caractérisé en ce que**
le dispositif d'extraction (1) et le dispositif de mesure de la turbidité sont réalisés sous la forme d'une unité de construction, le dispositif de mesure de la turbidité étant équipé d'au moins deux points de mesure (4, 4') indépendants l'un de l'autre et fixés à des hauteurs différentes au-dessous du dispositif d'extraction (1).

13. Dispositif conforme à la revendication 12,
**caractérisé en ce que**
l'unité de construction constituée par le dispositif d'extraction (1) et le dispositif de mesure de la turbidité est guidée le long d'éléments de guidage verticaux (3).

14. Dispositif conforme à la revendication 12 ou 13,
**caractérisé en ce qu'**
il est en outre prévu au moins un dispositif (15) pour surveiller l'état de remplissage du réacteur.

15. Dispositif conforme à l'une des revendications 12 à 14,
**caractérisé en ce que**
le dispositif (15) pour surveiller l'état de remplissage du réacteur est monté sur la soupape d'extraction (1) et/ou sur les éléments de guidage (3).
